# EUROPEAN PATENT APPLICATION

(11) **EP 2 031 829 A2**
(43) Date of publication of application: **04.03.2009**
(21) Application number: 08252650.0
(22) Date of filing: 08.08.2008
(51) Int. Cl.: H04L 29/06

(54) **Request and notification for metadata of content**

(30) Priority: 31.08.2007 JP 2007225754
(71) Applicant: Sony Corporation, Tokyo (JP)
(72) Inventor: Yamagishi, Yasuaki, Tokyo (JP)
(74) Representative: Merryweather, Colin Henry

(57) **Abstract**

A server apparatus has a database configured to store metadata of content. A message receiving unit receives a subscribe request for an event notification subscription from a client terminal, the subscribe request including a search condition for the metadata, and establishes a dialog for the event notification subscription. A metadata search unit searches the database on the basis of the search condition. A message sending unit generates a notify message including a search result obtained by the metadata search unit and sends the notify message to the client terminal.

## Description

This application is based upon and claims the benefit of priority to Japanese Patent Application No. 2007-225754, filed on August 31, 2007, the entire contents of which are incorporated herein by reference.

The present invention relates to a server apparatus, a network system, a content discovery-and-notification method, and a computer program that manage metadata of content.

Internet Protocol Television (IPTV) is a generic name for a service that uses the Internet protocol (IP) to deliver digital television broadcast or for broadcasting technology thereof. A standard candidate for session control in IPTV is the IP Multimedia Subsystem (IMS). The IMS is a precondition in standardization of Next Generation Networking (NGN) in the European Telecommunications Standards Institute (ETSI) and the International Telecommunication Union Telecommunication Standardization Sector (ITU-T). NGN is a next-generation backbone network based on IP technology.

The IMS represents a cellular phone multimedia service using packet communication, or is a standard for realizing such a service. In the IMS, by using an IP telephone system called the Session Initiation Protocol (SIP), a multimedia session can be controlled in a secure manner, guaranteeing quality of service (QoS). For example, Push-to-Talk, videophone, Internet television, etc., can be realized by the IMS.

In general, in order to view and listen to content by using IP television (IPTV) or the like, after content to be viewed and listened to is specified by using a service or application such as an electronic program guide (EPG), information necessary for acquiring the content is acquired and a session of streaming playback of content is started. In order that an EPG application implemented in an IPTV set-top box, a television, or the like may display content information to a viewer, and in order that the viewer may select and specify content, an EPG application acquires metadata describing details of the content from a metadata server that provides detailed information of content. On the basis of the metadata, the viewer selects and specities desired content from a generated screen of the EPG application. Acquisition of the metadata is periodically performed, for example, whenever new metadata is added in the metadata server, and whenever content of existing metadata is updated. After that, an IPTV client establishes an IPTV session between the IPTV client and an IPTV server.

Japanese Patent Application Publication No. 2004-147128 (paragraph 0046, etc.) gives an example of session control using IMS-SIP. Specifically, in order to establish a session for performing image communication between image communication apparatuses, a session request message (INVITE message) based on SIP specifications is transmitted to an SIP proxy of a Voice over Internet Protocol (VoIP) service provider from an asymmetric digital subscriber line (ADSL) gateway that receives a transmission request packet from one image communication apparatus as a request source. After the SIP proxy performs address resolution of a destination described in a header of the session request message, the SIP proxy transmits a session request message (INVITE message) to an ADSL gateway corresponding to the destination.

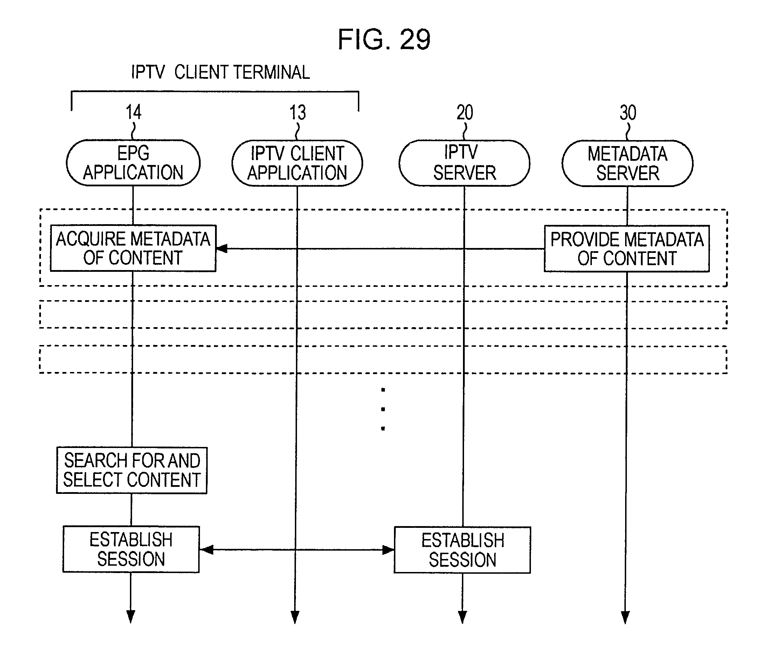

In general, in order to view and listen to content by using IPTV or the like, as shown in, for example, Fig. 29, after specifying content to be viewed and listened to by using an EPG application 14 implemented in an IPTV client terminal such as a set-top box or TV, information necessary for acquiring the content may be acquired and a session of streaming playback of the content may be started. In order that the EPG application 14 may display content information to a viewer and in order that the viewer may select and specify the content, the EPG application 14 may acquire metadata describing content details from a metadata server 30 that provides detailed information of the content. Based on the metadata, the viewer may select and specify desired content from a generated EPG application screen. Acquisition of the metadata may be periodically performed, for example, whenever new metadata is added in the metadata server 30 or whenever the content of existing metadata is updated. After that, an IPTV client terminal may establish an IPTV session for playing back content between the IPTV client terminal and an IPTV server 20.

In such a common IPTV system, periodic acquisition of metadata from a metadata server by an IPTV client terminal is expensive. It is difficult for the IPTV client to predict events such as addition of new metadata and updating of metadata in a metadata server. Thus, in order to enable selection of content based on preferably latest metadata, the IPTV client terminal may need to request the latest version of desired metadata from the metadata server in a state in which a short polling period is set. Accordingly, in a case where there are many metadata servers, only the polling processing may be expensive.

In addition, in the IMS, the SIP may be utilized for session control. In addition to the IMS-SIP, the original SIP may include a SUBSCRIBE/NOTIFY protocol. The SUBSCRIBE/NOTIFY protocol defines a mechanism in which, after a client side offers a condition to a server side, when an event satisfying the condition has occurred, the client side is notified of the event. Conditions and events may be freely defined.

However, the existing IPTV protocol does not define a general purpose system in which, by using the SUBSCRIBE/NOTIFY mechanism of the SIP to declare, for the server side, formats capable of being processed by the client side and information representing types of preferred content, when matched content has been discovered, a notification is received.

A candidate for a standard metadata format in IPTV standardization is TV-Anytime metadata. TV-Anytime metadata is a metadata standard standardized by the ETSI. TV-Anytime metadata is a candidate for a metadata format in, for example, an IPTV standard in Digital Video Broadcasting (DVB) and an IPTV standard in the ITU-T.

In view of the above, it would be desirable to reduce a metadata acquisition cost by discovering desired content by using a subscribe and notify mechanism.

Consistent with an embodiment of the claimed invention, there is provided a server apparatus comprising a database configured to store metadata of content; message receiving means for receiving a subscribe request for an event notification subscription from a client terminal, the subscribe request including a search condition for the metadata, and for establishing a dialog for the event notification subscription; metadata search means for searching the database on the basis of the search condition; and message sending means for generating a notify message including a search result obtained by the metadata search means and for sending the notify message to the client terminal.

After the dialog is established, the metadata search means may periodically search the database. In addition, the search condition may be a query for the database or may be information for referring to or acquiring a query for the database. Furthermore, the search result may include matched metadata that matches the search condition. Alternatively, the search result may include information for referring to or acquiring matched metadata that matches the search condition.

Consistent with another embodiment of the claimed invention, there is provided a network system comprising a client terminal capable of receiving content via a network and playing the content; and a server apparatus configured to manage metadata of the content. The client terminal includes message sending means for generating a subscribe request for an event notification subscription, the subscribe request including a search condition for the metadata, and for sending the subscribe request to the server apparatus; and a metadata storage unit configured to receive a notify message as a response to the subscribe request from the server apparatus, and to store a result of searching for the metadata, the result being included in the notify message. The server apparatus includes a database configured to store the metadata of the content; message receiving means for receiving the subscribe request from the client terminal and for establishing a dialog for the event notification subscription; metadata search means for searching the database on the basis of the search condition; and message sending means for generating the notify message and for sending the notify message to the client terminal.

Consistent with another embodiment of the claimed invention, there is provided a content discovery-and-notification method comprising generating a subscribe request for an event notification subscription, the subscribe request including a search condition for metadata of content; sending the subscribe request from a client terminal to a server apparatus; receiving the subscribe request from the client terminal; establishing a dialog for the event notification subscription; searching a database storing the metadata of the content based on the search condition; generating a notify message including a search result obtained by the searching of the database; and sending the notify message from the server apparatus to the client terminal.

Consistent with another embodiment of the claimed invention, there is provided a computer-readable storage medium storing a computer program that causes a server apparatus to perform a method comprising generating a subscribe request for an event notification subscription, the subscribe request including a search condition for metadata of content; sending the subscribe request from a client terminal to a server apparatus; receiving the subscribe request from the client terminal; establishing a dialog for the event notification subscription; searching a database storing the metadata of the content based on the search condition; generating a notify message including a search result obtained by the searching of the database; and sending the notify message from the server apparatus to the client terminal.

Additional objects and advantages of the invention will be set forth in part in the following description, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

The accompanying drawings, which are incorporated in and constitute a part of this specification, illustrate non-limitative embodiments of the invention and together with the description, serve to explain the principles of the invention.

In the drawings:
Fig. 1 shows an exemplary SIP event notification mechanism for use in an IPTV system;
Fig. 2 shows an exemplary format of an SIP SUBSCRIBE request for an event notification subscription;
Fig. 3 shows an exemplary XQuery sentence in the SIP SUBSCRIBE request shown in Fig. 2;
Fig. 4 shows an exemplary query in XPath expression;
Fig. 5 shows an exemplary query in FLWOR expression;
Fig. 6 shows an exemplary XML schema for a metadata query and metadata;
Fig. 7 shows an exemplary SIP SUBSCRIBE request including a query in XPath expression;
Fig. 8 shows an exemplary "200 OK" response to the SIP SUBSCRIBE request shown in Fig. 4;
Fig. 9 shows an exemplary format of an SIP NOTIFY message for notification of a content discovery-notification event;
Fig. 10 shows an exemplary SIP NOTIFY message;
Fig. 11 shows another exemplary SIP NOTIFY message shown in Fig. 9;
Fig. 12 shows an exemplary "200 OK" response to the SIP NOTIFY message shown in Fig. 10;
Fig. 13 shows another exemplary SIP NOTIFY message shown in Fig. 9;
Fig. 14 shows an exemplary metadata document stored in the body part of an SIP NOTIFY message;
Fig. 15 shows an exemplary configuration of the IPTV system;
Fig. 16 shows an exemplary hardware configuration of an IPTV client terminal in the IPTV system shown in Fig. 15;
Fig. 17 shows an exemplary hardware configuration of each of an IPTV server and a metadata server in the IPTV system shown in Fig. 15;
Fig. 18 shows an exemplary content discovery-notification event package in the IPTV system;
Fig. 19 shows an exemplary dialog establishing process for an event notification subscription in an IPTV client terminal;
Fig. 20 shows an exemplary dialog establishing process for an event notification subscription in a metadata server;
Fig. 21 shows an exemplary initial searching of the metadata server;
Fig. 22 shows an exemplary periodic searching of the metadata server;
Fig. 23 shows an exemplary search result acquiring process in an EPG application;
Fig. 24 shows an exemplary process in which metadata at the IPTV client terminal is used to select content and to request establishment of a content playback session;
Fig. 25 shows an exemplary acquisition and playback of content;
Fig. 26 shows an exemplary procedure for the release process for releasing the dialog for the event notification subscription by the IPTV client terminal;
Fig. 27 shows an exemplary process for releasing the dialog for the event notification subscription by the metadata server;
Fig. 28 shows the exemplary process continued from Fig. 27; and
Fig. 29 shows an exemplary procedure from acquisition of content metadata through establishment of a session in a common IPTV system.

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions, or modifications may be made to the components illustrated in the drawings, and the exemplary methods described herein may be modified by substituting, reordering, or adding steps to the disclosed methods. Accordingly, the following detailed description does not limit the invention. Instead, the proper scope of the invention is defined by the appended claims.

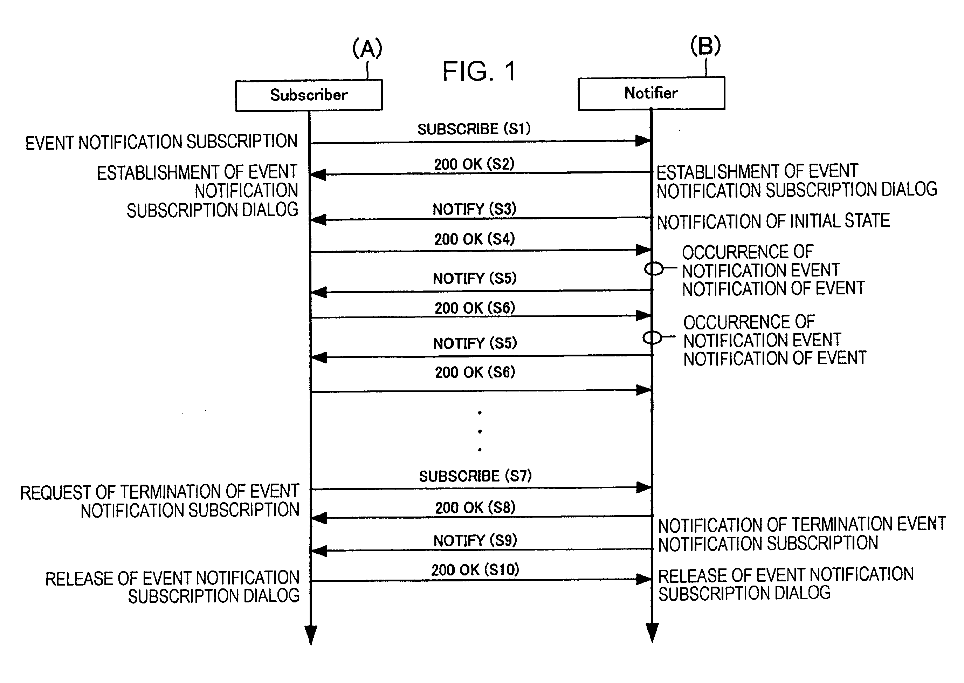

In Fig. 1, Subscriber (A) is a subscriber of an event notification subscription, and Notifier (B) is a notifier notifying a subscriber of occurrence of an event in accordance with the event notification subscription.

Subscriber (A) may subscribe for event notification from Notifier (B) using an SIP SUBSCRIBE request. At this time, Subscriber (A) may send an initial SIP SUBSCRIBE request to a uniform resource identifier (URI) of Notifier (B) (S1). This initial SIP SUBSCRIBE request may include an Event header representing an event type and an Expires header representing a subscription notification duration (event monitoring period).

After receiving the initial SIP SUBSCRIBE request for the event notification subscription, Notifier (B) may accept an event notification subscription being requested by establishing a dialog for the event notification subscription by sending back a "200 OK" response to Subscriber (A) (S2). A dialog is signaling (exchange of messages) between Subscriber (A) and Notifier (B). Also, Subscriber (A), which has received "200 OK" response from Notifier (B), may establish a dialog for an event notification subscription.

After the dialog is established, Notifier (B) may send an SIP NOTIFY message to Subscriber (A) in order to notify Subscriber (A) of an initial state at the time Notifier (B) received the initial SIP SUBSCRIBE request (S3). An SIP NOTIFY message may include an Event header representing an event to be reported and a Subscriber-Status header representing a notification subscription status. The notification subscription status may be defined as "active" indicating that a notification subscription is valid, "pending" indicating that a notification subscription is suspended (a status in which the notification subscription has not been determined to be valid or rejected), or "terminated" indicating that a notification subscription is invalid (a status in which the notification subscription has been rejected or has been terminated for some reason). After receiving the SIP NOTIFY message from Notifier (B), Subscriber (A) may send back "200 OK" response to Notifier (B) (S4).

Regarding an event for which the notification subscription is performed and whose status notification is to be performed has occurred, after the dialog is established, Notifier (B) may send an SIP NOTIFY message for event notification to Subscriber (A) (S5). A sending opportunity of an actual SIP NOTIFY message and a MIME (Multipurpose Internet Mail Extensions) type and format of a message body part may be defined in an event package defined according to the purpose of an event for notification.

When Subscriber (A) has received the SIP NOTIFY message from Notifier (B), Subscriber (A) may confirm whether a dialog for an event notification subscription exists. If the dialog exists and message processing is possible including the content of an Event header, then Subscriber (A) may send back a "200 OK" response to Notifier (B) (S6).

Where notification subscription is terminated by Subscriber (A), an SIP SUBSCRIBE request, in which an Expire header is set to 0, may be sent from Subscriber (A) to Notifier (B) (S7). After Notifier (B), which has received the SIP SUBSCRIBE request, sends back a "200 OK" response (S8), Notifier (B) may send to Subscriber (A) an SIP NOTIFY message representing the termination of the event notification subscription, that is, an SIP NOTIFY message in which a status represented by the Subscriber-Status header is "terminated" (S9). When Subscriber (A) has received this SIP NOTIFY message, Subscriber (A) may send back a "200 OK" response (S10). This may cause the dialog for the event notification subscription to be released in both Subscriber (A) and Notifier (B).

To protect security of communications in this event notification subscription between Subscriber (A) and Notifier (B), security mechanisms usable in SIP, such as HyperText Transfer Protocol (HTTP) digest authentication for use in request authentication, securing of security on a transport layer in a message transfer path using SIPS URI, and encryption of a message body part including status notification details based on Secure Multipurpose Internet Mail Extensions (S/MIME), may be used.

In the SIP event notification mechanism, Subscriber (A) may be an EPG application on a client side, and Notifier (B) may be a metadata server. The metadata server may use a TV-Anytime metadata format to manage metadata that is detailed information of content that can be delivered by an IPTV server through streaming, downloading, or the like. The TV-Anytime metadata may be an Extensible Markup Language (XML) document and may be stored in a database such as an XML database.

In the IPTV system consistent with an embodiment of the claimed invention, the EPG application on the client side may declare, for the metadata server, formats that can be processed and information specifying (representing) content having metadata that matches a user's preference on the client side. When content metadata that matches the declared information has been discovered, the SIP event notification mechanism may execute a service that notifies the EPG application on the client side of the content metadata. This service is called a "content discovery-notification event package."

Next, details of the content discovery-notification event package will be described.

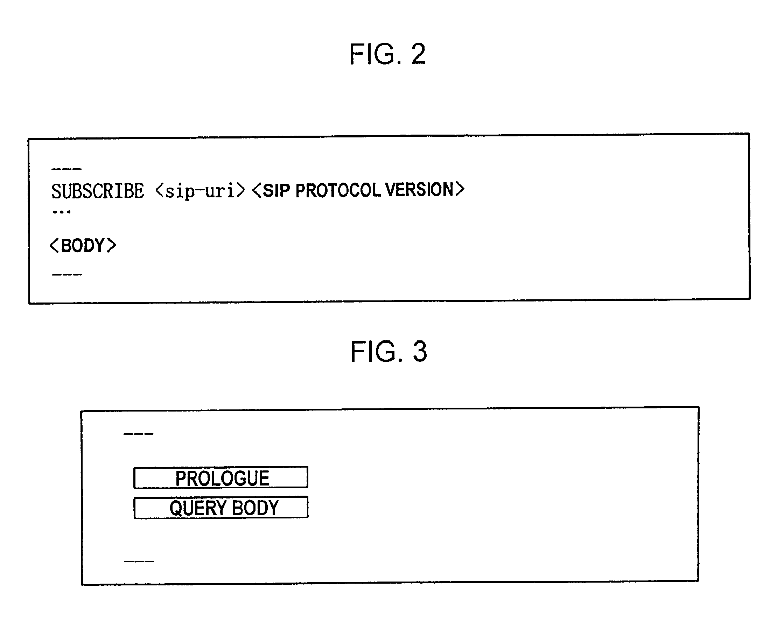

Fig. 2 shows an exemplary format of an SIP SUBSCRIBE request that may be sent from Subscriber (A) to Notifier (B) for an event notification subscription. As shown in Fig. 2, "sip-uri" may contain a URI that represents a destination of an SIP SUBSCRIBE request. The body part may contain an XQuery sentence that searches for an XML document (metadata service) of metadata concerning content that is provided in a targeted service.

Fig. 3 shows an exemplary XQuery sentence. As shown in Fig. 3, the XQuery sentence may include a prologue and a query body. The prologue may contain an XQuery version declaration "xquery version 1.0," a name space declaration "declare default element namespace," "urn:tva:metadata:2005," or the like. The query body may contain a query in XPath or FLWOR expression that searches for an XML metadata document.

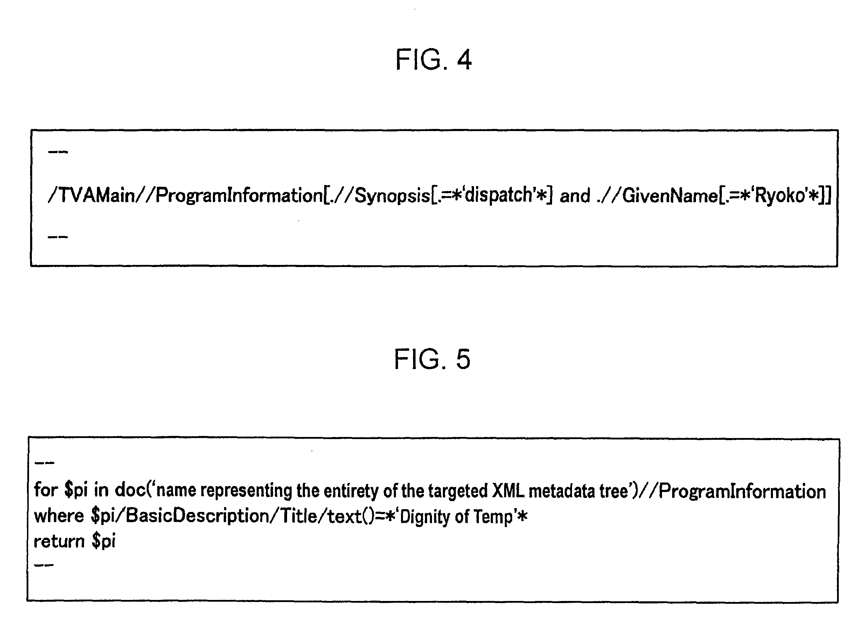

Fig. 4 shows an exemplary query in XPath expression that returns, from targeted TV-Anytime metadata, content metadata which includes "dispatch" as a content synopsis and which includes "Ryoko" as a performer's name. This query returns the entirety of a ProgramInformation element, where "dispatch" is included in a text part of a Synopsis element under (more specifically, a BasicDescription element immediately below a ProgramInformation element) a ProgramInformation element describing content metadata, and where "Ryoko" is included as a GivenName element under (more specifically, a Creditsltem element of a CreditsList element of a BasicDescription element immediately below the ProgramInformation element) the ProgramInformation element. Where there is a plurality of ProgramInformation elements that match conditions, the query is a sequence of a plurality of ProgramInformation elements. For example, such a query has the arrangement "<ProgramInformation>the content of the first ProgramInformation</ProgramInformation><ProgramInformation>the content of the second ProgramInformation</ProgramInformation>.

Fig. 5 shows an exemplary query in FLWOR expression that returns, from targeted TV-Anytime metadata, content metadata including "Dignity of Temp" as a content title. This query returns the entirety of a ProgramInformation element, where "Dignity of Temp" is included in a text part of a Title element of a BasicDescription element of a ProgramInformation element describing content metadata.

An SIP message may take an important role of signaling for controlling a session in the IMS. Thus, a high-priority path on a network may be assigned to the SIP message. Accordingly, in an environment in which SIP session control frequently occurs in large quantities, it may be necessary to minimize traffic of network resources (such as bandwidth) for the signaling path. On the other hand, a document of content metadata may likely be very large depending on a service provider. In this case, a metadata query reported by an SIP SUBSCRIBE request and metadata reported by an SIP NOTIFY message (described later) may be very large, and may have a possibility of constraining resources for SIP signaling. Therefore, to avoid this problem, in addition to a method that stores a query and metadata that directly correspond to body parts of an SIP SUBSCRIBE request and an SIP NOTIFY message, a method that stores information for referring to or acquiring the query and the metadata is provided.

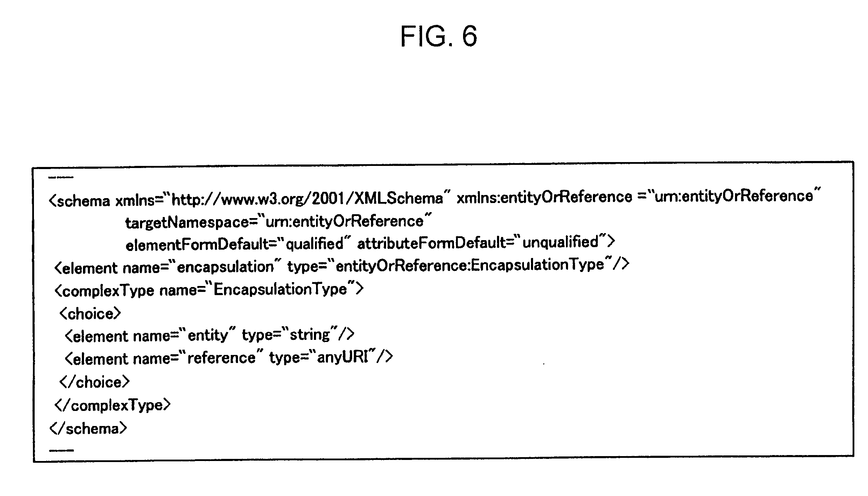

Fig. 6 shows an exemplary XML schema of an XML document of metadata that stores a metadata query, a result metadata element, or a reference for acquiring a metadata query or a result metadata element. "Encapsulation" refers to a root element, "entity" refers to an element that directly stores a metadata query or a result metadata element, and "reference" refers to an element that stores a reference for acquiring a metadata query or a result metadata element.

A MIME type that identifies this data format (DIDF: Discovery Information Data Format) may be set to "application/didf+xml." In the case of storing a metadata query or a reference to a metadata query, an encapsulation element may be called a "filter document." In the case of storing a metadata element that is a result of a query or a reference to a query, an encapsulation element may be called a "metadata document."

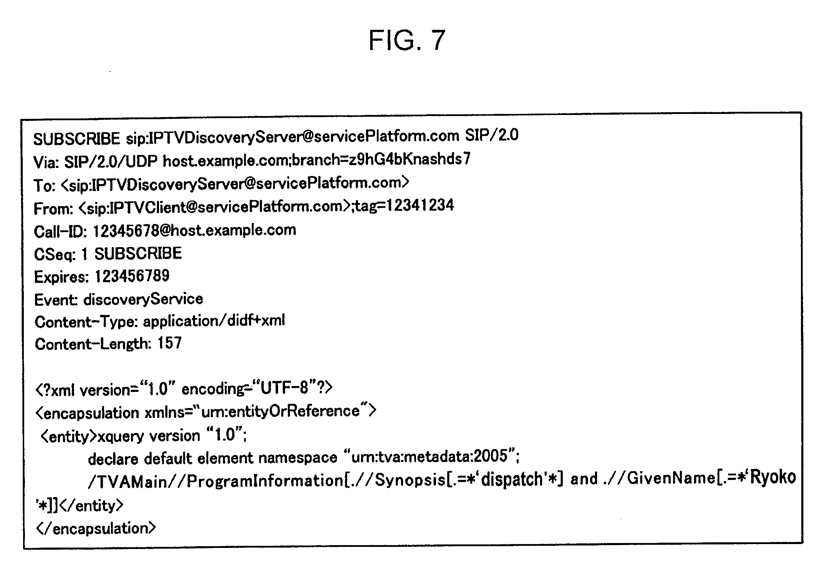

Fig. 7 shows an exemplary SIP SUBSCRIBE request including the query in XPath expression in Fig. 4. "sip:IPTVDiscoveryServer@servicePlatform.com" in the start line of a request URI in an SIP SUBSCRIBE method may be an sip-uri of the metadata server 30 that provides a content-discovery event-notification service. The representation "sip:IPTVClient@servicePlatform.com" in a From header may be an sip-uri of a client terminal. An Event header may store "discoveryService" that identifies a content discovery-notification event package. An Expires header may represent a valid period of this subscription (event subscription) in units of seconds. A Content-Type header may represent a MIME type (application/didf+xml) of a body part. The query in XPath expression may be stored as the content of an entity element.

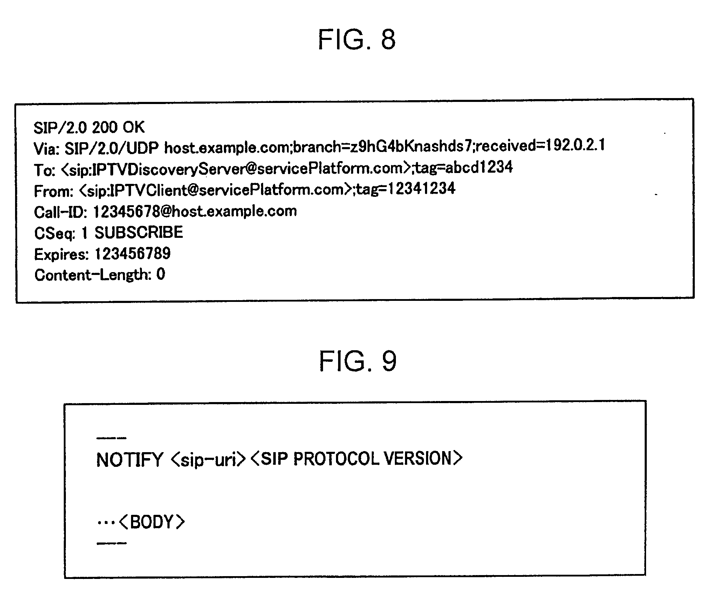

After Notifier (B) receives the SIP SUBSCRIBE request, if Notifier (B) accepts an event notification subscription being requested, then Notifier (B) may send back a "200 OK" response to Subscriber (A). Fig. 8 shows an exemplary "200 OK" response.

After Notifier (B) sends back the "200 OK" response, at the time Notifier (B) has received an SIP SUBSCRIBE request, or in a case where, regarding an event for which the notification subscription is performed, an event whose status notification is to be performed has occurred, Notifier (B) may sends to Subscriber (A) an SIP NOTIFY message for notifying Subscriber (A) of an initial state or a content discovery-notification event. Fig. 9 is an exemplary format of the SIP NOTIFY message for notification of the content discovery-notification event. In this format, an sip-uri may store a URI that represents a party at a connection destination, and a body part may store a metadata element of a content discovery result.

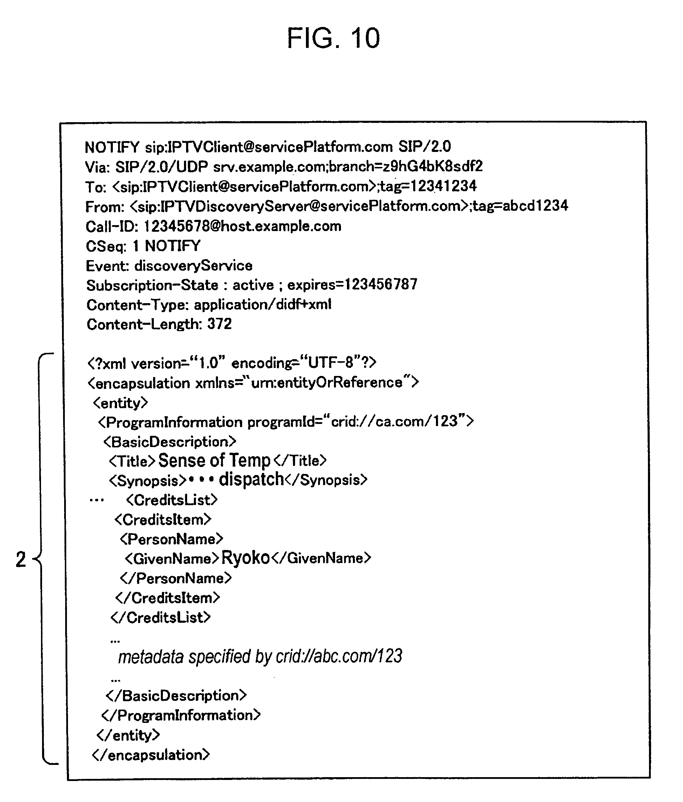

Fig. 10 shows an exemplary SIP NOTIFY message in response to an SIP SUBSCRIBE request including the query in Fig. 4 in XPath expression, the SIP NOTIFY message storing a metadata element 2 of a content discovery result in a body part. In Fig. 10, "sip:IPTVClient@servicePlatform.com" at the start line of a request URI of the SIP NOTIFY method may be an SIP-uri of an IPTV client terminal running an EPG application (for which event notification subscription is performed) that gets a content-discovery event-notification service. "sip:IPTVDiscoveryServer@servicePlatform.com" in a From header may be an sip-uri of a metadata server that provides a content-discovery event-notification service. In a Subscription-State header, the representation "active" that indicates that this subscription is valid may be specified, and an expires parameter representing a valid period of the notification subscription may be included.

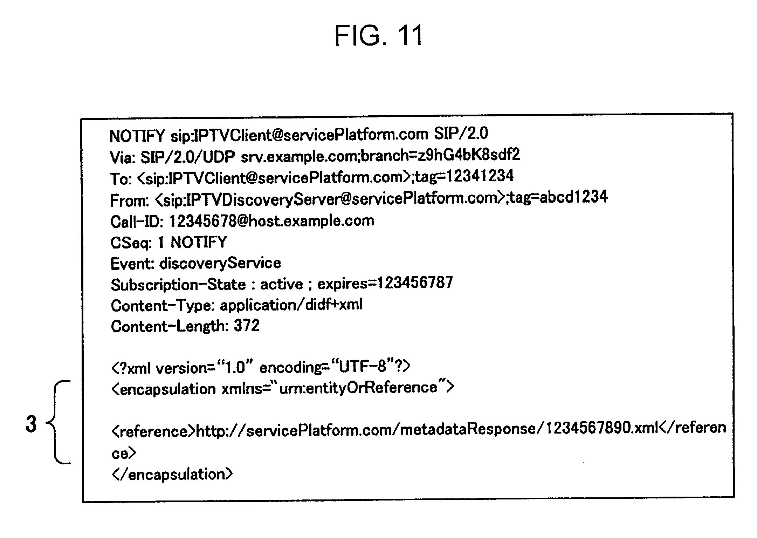

Fig. 11 shows an exemplary SIP NOTIFY message identical to that in Fig. 10 in a method of storing information 3 for referring to or acquiring a metadata element of a content discovery result. In Fig. 11, the metadata element of the content discovery result may be acquired by using, as a reference destination, "http://servicePlatform.com/metadataResponse/1234567890.xml" of a reference element.

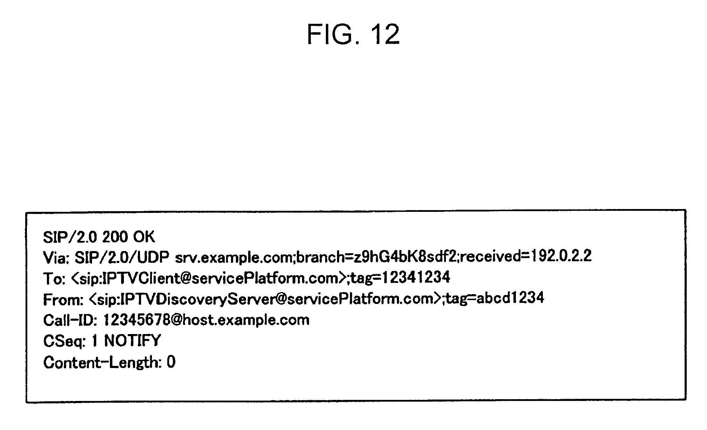

After Subscriber (A) receives the SIP NOTIFY message from Notifier (B), Subscriber (A) may send back a "200 OK" response to Notifier (B). Fig. 12 shows an exemplary "200 OK" response responsive to the SIP NOTIFY message.

The SIP NOTIFY message may be sent whenever an event occurs in Notifier (B) that corresponds to an event for which subscription is performed by Subscriber (A). While the valid period of the subscription (event subscription) of the body part of the SIP SUBSCRIBE request shown in Fig. 7 may be valid, when content metadata that matches a query is added to an XML document (a metadata database 34) of metadata concerning content provided by a targeted service, an SIP NOTIFY message may be sent.

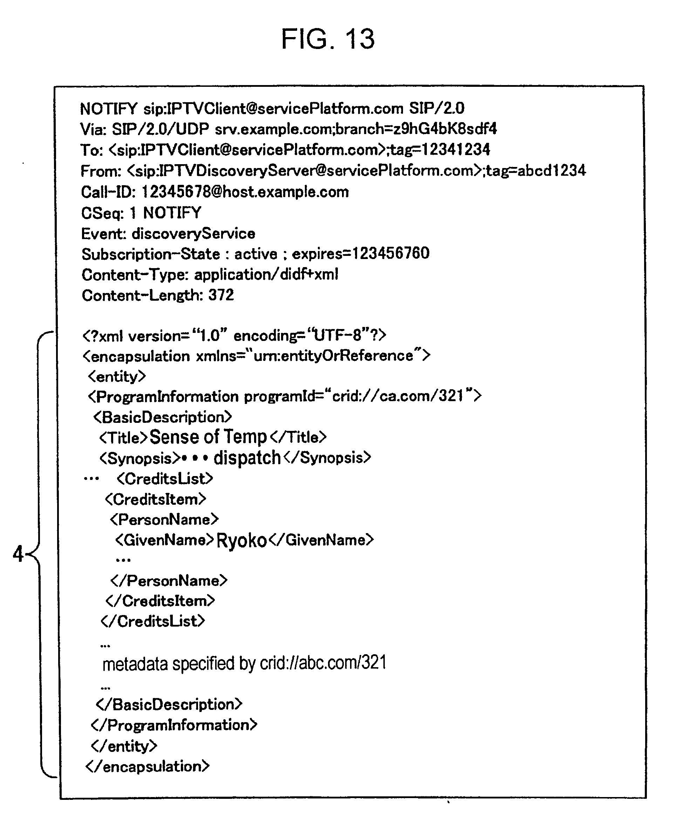

Fig. 13 shows an exemplary SIP NOTIFY message including metadata 4 that newly matches the query by adding metadata to the XML document (the metadata database 34).

The content discovery-notification event package may be summarized as follows.

### 1) Event Package Name (Name of Event Package)

The name of this package may be "discoveryService." This name may be used in an Event header field specified by an SIP SUBSCRIBE request and an SIP NOTIFY message.

### 2) Body Part of SIP SUBSCRIBE Request

An SIP SUBSCRIBE request may include a body part. This body part may be a filter document. The filter document may match a data format of a MIME type "application/didf+xml." The filter document may request notification of only a specified event and may specify a limitation concerning a data set returned by an SIP NOTIFY message. For example, a filter may be set such that the filter performs event notification only when content that matches a user's preference can be provided.

### 3) Subscription Period (Default Subscription Period)

A default valid period of subscription may be set to 2592000 seconds (30 days). A subscriber may freely specify a valid period in the header field.

### 4) Body Part of SIP NOTIFY Message

An SIP NOTIFY message may include a body part. This body part may be a metadata document. The metadata document may match a data format of MIME type "application/didf+xml." The metadata document may store only metadata that matches a filter that is set when a subscription is performed.

### 5) Security of Message Exchange (Authentication/permission method)

When an SIP SUBSCRIBE request is received, security mechanisms usable in the SIP, such as HTTP digest authentication for use in request authentication, establishment of security on a transport layer on a message transfer path using an SIPS URI, and encryption of a message body part including status notification details based on S/MIME, may be used unchanged.

### 6) Timing of Sending SIP NOTIFY Message (Frequency of Sending Message)

Sending of an SIP NOTIFY message may be performed for each event (creation of new data, updating of content, etc.) representing change of the content of the metadata database 34, which may be monitored by Notifier (B), and may be performed for each predetermined period (for example, 3600 seconds by default). The sending may be dependent on a manner of operation of Notifier (B). When the sending is performed for each predetermined period, events that occur in the period may be collectively sent.

### 7) Acquisition and Playback of Content

The EPG application on the client side, which has discovered desired content by using a content discovery-notification event service, may pass the metadata document stored in the body part of a returned resultant SIP NOTIFY message to an IPTV client application 13 running on the same client terminal, and may request acquisition and playback of content. The IPTV client application 13 may extract, from relevant metadata elements, address information, etc., necessary for acquiring the content, downloading the content, or playing back the content on a streaming server.

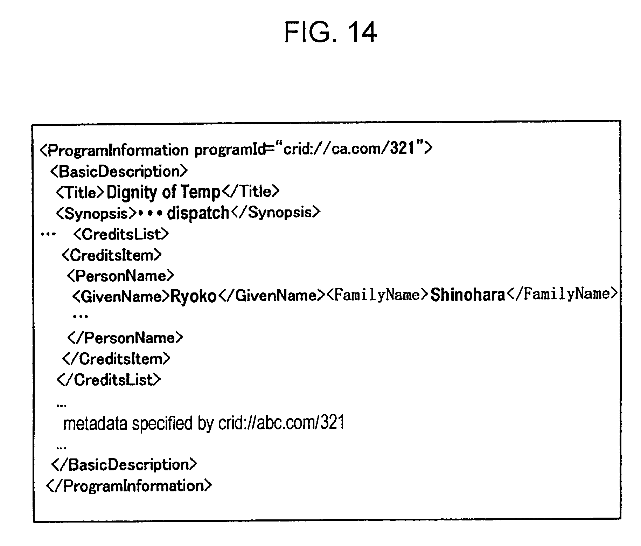

Fig. 14 shows an exemplary metadata document stored in the body part of an SIP NOTIFY message. To acquire content as a description object in a ProgramInformation element that is content metadata stored in this metadata document, an OnDemandProgram element that describes an address URL of content may be acquired by using "crid://ca.com/321" as a key that is an attribute value of the ProgramInformation element. This OnDemandProgram element may be acquired by directly issuing a query to the metadata database 34, and may be acquired by using the content discovery-notification event service. In this example, only the ProgramInformation element of the content metadata may be used as an object to be sent as a result. However, by configuring a query for acquiring this element and the OnDemandProgram element and by performing a subscription, the ProgramInformation element and the OnDemandProgram element associated therewith may be simultaneously acquired.

Next, an IPTV system 100 consistent with an embodiment of the claimed invention is described below.

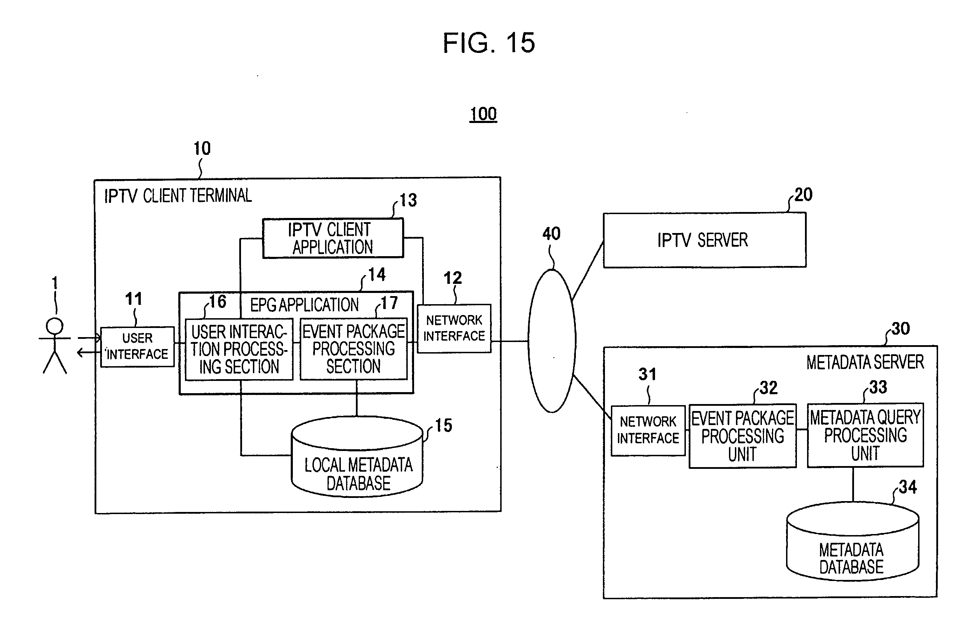

As shown in Fig. 15, the IPTV system 100 may include an IPTV client terminal 10, an I PTV server 20 that allows content to be delivered by streaming, downloading, or the like, a metadata server 30 that manages metadata that is detailed information of the content allowed to be delivered by the IPTV server 20, and a network 40 that can connect these elements.

The IPTV client terminal 10 may be, for example, a terminal device such as a personal computer (PC), a set-top box, or a TV. The IPTV client terminal 10 may include a user interface 11, a network interface 12, an IPTV client application 13, an EPG application 14, and a local metadata database 15.

The user interface 11 may process input and output for a user 1. For example, the user interface 11 may receive various instructions input from the user 1 and perform output to the EPG application 14. Also, the user interface 11 may perform responding from the EPG application 14 to the user 1, processing that outputs playback information of content, etc.

The network interface 12 may provide an interface with the network 40 such as the Internet.

The IPTV client application 13 may be software that performs various types of control for causing the IPTV client terminal 10 to operate as an IPTV client.

The EPG application 14 may include a user interaction processing section 16 that performs processing such as input and output for the user 1, and an event package processing section 17 that performs processing on a content discovery-notification event package. The event package processing section 17 may be a message sending unit which generates an SIP SUBSCRIBE request for an event notification subscription, the request including a search condition for metadata, and which sends the SIP SUBSCRIBE request to the metadata server 30.

The local metadata database 15 may be formed of, for example, a storage device such as a hard disk drive or a semiconductor memory, and store content metadata acquired from the metadata server 30. In other words, the local metadata database 15 may be a metadata storage unit that stores a metadata search result included in an SIP NOTIFY message received from the metadata server 30.

In addition, the IPTV client terminal 10 may include a content storage unit that stores data of content received from the IPTV server 20 by streaming, downloading, or the like, and a content playback unit that performs processing from decoding through playback of content although these units are not shown.

The IPTV server 20 may manage substantial data of content that can be delivered by streaming, downloading, or the like. Also, the IPTV server 20 may establish a session for acquiring and playing back content between the IPTV server 20 and the IPTV client application 13 of the IPTV client terminal 10, and deliver the content to the IPTV client terminal 10 by streaming, downloading, or the like.

The metadata server 30 may include a network interface 31, an event package processing unit 32, a metadata query processing unit 33, and a metadata database 34.

The network interface 31 may provide an interface with the network 40 such as the Internet.

The event package processing unit 32 may perform processing of the content discovery-notification event package. The event package processing unit 32 may be a message receiving unit which receives, from the IPTV client terminal 10, an SIP SUBSCRIBE request for an event notification subscription, the request including a search condition for metadata, and is a message sending unit which generates an SIP NOTIFY message including a search result obtained by a metadata search unit, and which sends back the SIP NOTIFY message to the IPTV client terminal 10.

The metadata query processing unit 33 may issue a query for the metadata database 34 and search for metadata. In other words, the metadata query processing unit 33 may be the metadata search unit which searches the metadata database 34 based on the search condition included in the SIP SUBSCRIBE request received by the message receiving unit.

The metadata database 34 may manage the metadata that is detailed information of content deliverable by the IPTV server 20 by using a format of TV-Anytime metadata. The TV-Anytime metadata may be an Extensible Markup Language (XML) document and may be stored in a database such as an XML database.

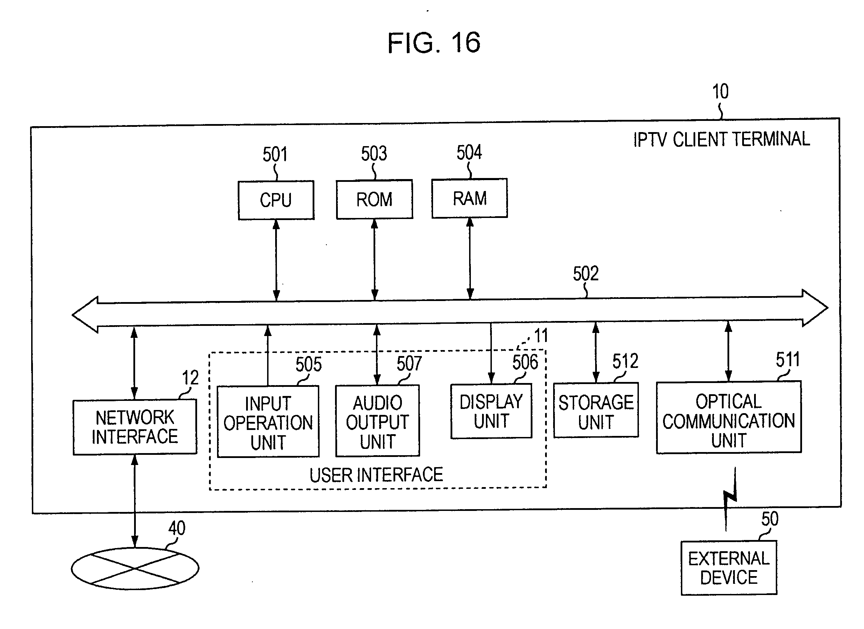

Fig. 16 shows an exemplary hardware configuration of the IPTV client terminal 10. As shown in Fig. 16, a read-only memory (ROM) 503, a random access memory (RAM) 504, an input operation unit 505, a display unit 506, an audio output unit 507, the network interface 12, an optical communication unit 511, and a storage unit 512 may be connected to a central processing unit (CPU) 501 via a system bus 502.

The input operation unit 505 may include various keys, and process various commands and input data from a user. A command input from the user with the input operation unit 505 may be supplied to the CPU 501 via the system bus 502 by using an input interface (not shown). The display unit 506 may include, for example, a display such as a liquid crystal display (LCD), and a display control circuit for driving the display. The audio output unit 507 may include a circuit that converts a digital audio signal into an analog audio signal, and a speaker. The input operation unit 505, the display unit 506, and the audio output unit 507 may correspond to the user interface 11 shown in Fig. 15. The network interface 12 may process wired or wireless connection to the network 40.

The optical communication unit 511 may be an interface for processing communication with a remote controller or an external device 50, and specifically communicate with the external device 50 by using radiation, such as infrared radiation, as a wireless medium. In addition to radiation, other wireless media, such as radio waves, sound waves, and electromagnetic waves, may be used. The storage unit 512 may be, for example, a storage device such as a hard disk drive or a semiconductor memory.

The ROM 503 is a read-only memory that may permanently store a program for causing a computer to execute functions for the IPTV client terminal 10, data, etc. The program may be stored in the storage unit 512. The RAM 504 is a memory in which a program loaded from the ROM 503 or the storage unit 512, working data for the program, etc., are written. The CPU 501 may perform arithmetic processing for interpreting and executing the program stored in the ROM 503 or the program loaded into the RAM 504.

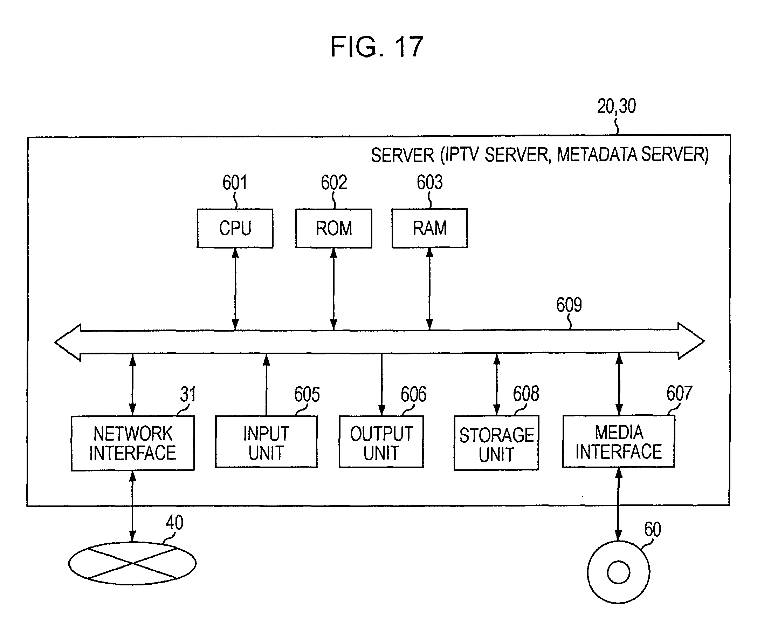

Fig. 17 shows an exemplary hardware configuration of each of the IPTV server 20 and the metadata server 30. As shown in Fig. 17, the IPTV server 20 and the metadata server 30 may be each formed of a typical computer system such as a personal computer.

In other words, a ROM 602, a RAM 603, the network interface 31, an input unit 605 including a keyboard and a mouse, an output unit 606 including a speaker and a display such as a cathode ray tube (CRT) or an LCD, a media interface 607, and a storage unit 608 including a hard disk drive and a nonvolatile memory may be connected to a CPU 601 via a system bus 609.

The network interface 31 may process wired or wireless communication with the network 40. The storage unit 608 may store a program for causing a computer to execute functions for a specified server, various types of data, etc. The CPU 601 may load a program from the ROM 602 or the storage unit 608 into the RAM 603, and perform arithmetic processing for interpreting and executing the program. In the media interface 607, a removable medium 60, such as a magnetic disk, an optical disc, a magneto-optical disc, or a semiconductor memory, may be loaded, if necessary. A program that is read from the removable medium 60 may be installed into the removable medium 60, if necessary.

Next, an operation of the IPTV system 100 according to the embodiment will be described below.

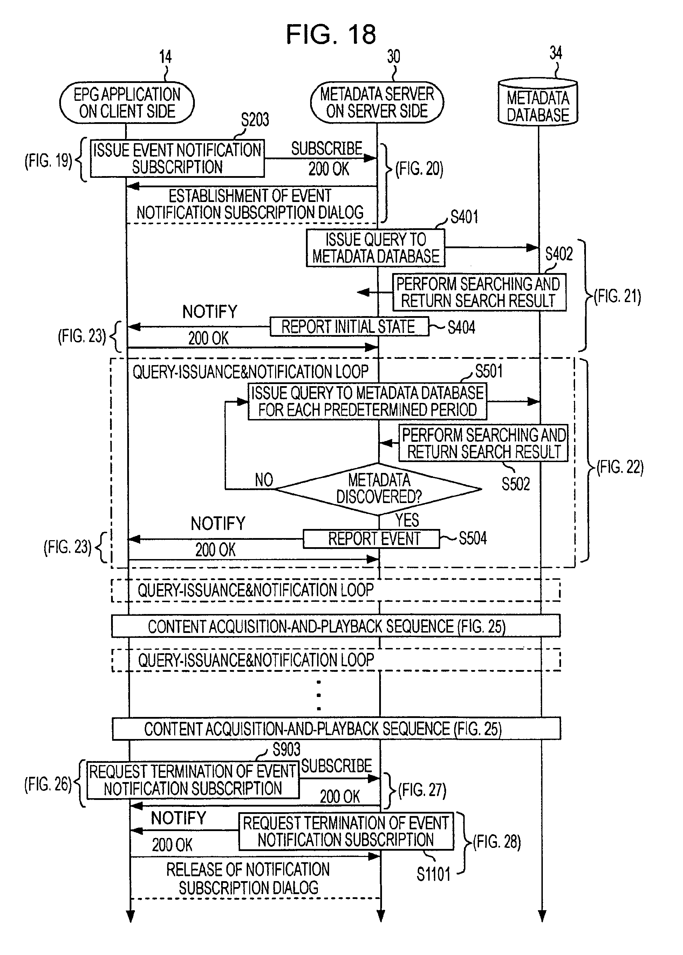

Fig. 18 shows an exemplary content discovery-notification event package in the IPTV system 100. First, a process in which a dialog for an event notification subscription for content discovery may be established between the IPTV client terminal 10 and the metadata server 30 may be performed in the following manner.

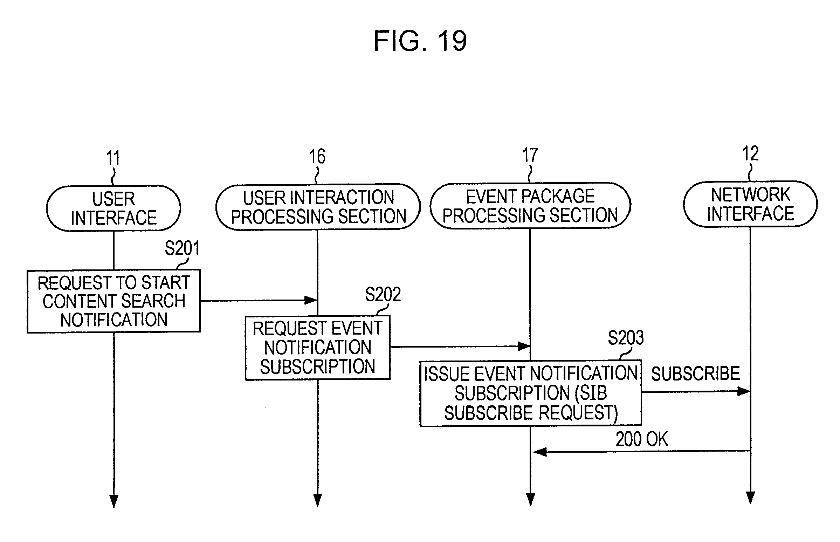

Fig. 19 shows an exemplary process flow at this time in the IPTV client terminal 10. First, the user interaction processing section 16 in the EPG application 14 of the IPTV client terminal 10 may accept a request to start content search notification from the user 1 via the user interface 11 (step S201 in Fig. 19). This request to start content search notification from the user 1 may be, for example, a request such as wanting content which includes "dispatch" as a content synopsis and which includes "Ryoko" as a performer's name. When the user interaction processing section 16 has accepted the request to start content search notification, the user interaction processing section 16 may generate an XQuery-sentence query that is stored in a body part of an SIP SUBSCRIBE request. More specifically, for example, the content of the entity element in the SIP SUBSCRIBE request shown in Fig. 7 may be generated by the user interaction processing section 16. After that, the user interaction processing section 16 may request an event notification subscription from the event package processing section 17 (step S202 in Fig. 19). The event package processing section 17 may send an SIP SUBSCRIBE request (see Fig. 7) for the event notification subscription to the metadata server 30 via the network interface 12 (step S203 in Fig. 19). At this time, in the destination of the SIP SUBSCRIBE request, a given sip-uri (for example, "sip:IPTVDiscoveryServer@servicePlatform.com" in the start line in Fig. 7) of the metadata server 30 may be stored. After that, the event package processing section 17 may receive a "200 OK" response (see Fig. 8) in response to the SIP SUBSCRIBE request, whereby the dialog for the event notification subscription for content discovery is established.

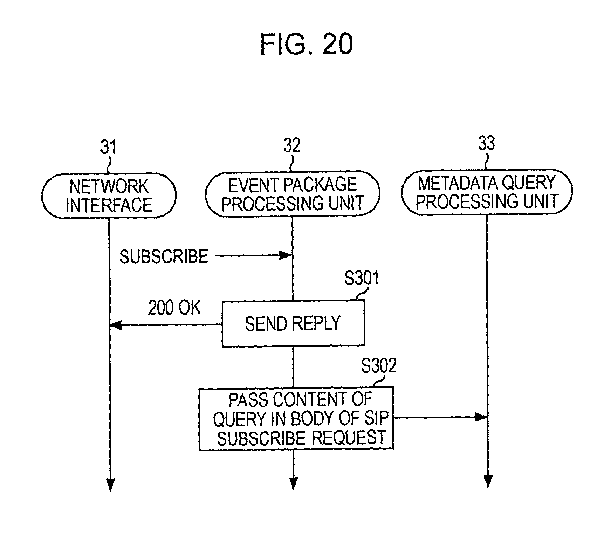

Next, a dialog establishing process for an event notification subscription in the metadata server 30 will be described below. An exemplary process flow at this time in the metadata server 30 is shown in Fig. 20.

After the event package processing unit 32 has received the SIP SUBSCRIBE request (for the event notification subscription) issued by the EPG application 14 on the client side via the network interface 31, the event package processing unit 32 may send back the "200 OK" response (see Fig. 8) (in response thereto) to the EPG application 14 on the client side via the network interface 31 (step S301 in Fig. 20), whereby the dialog for the event notification subscription is established. Next, the event package processing section 17 may pass the XQuery-sentence query stored in the body part of the received SIP SUBSCRIBE request to the metadata query processing unit 33 (step S302 in Fig. 20).

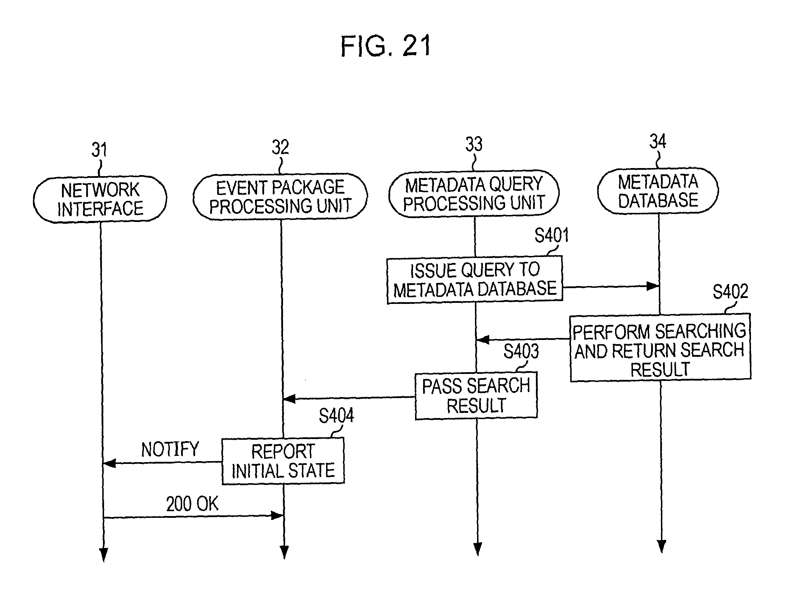

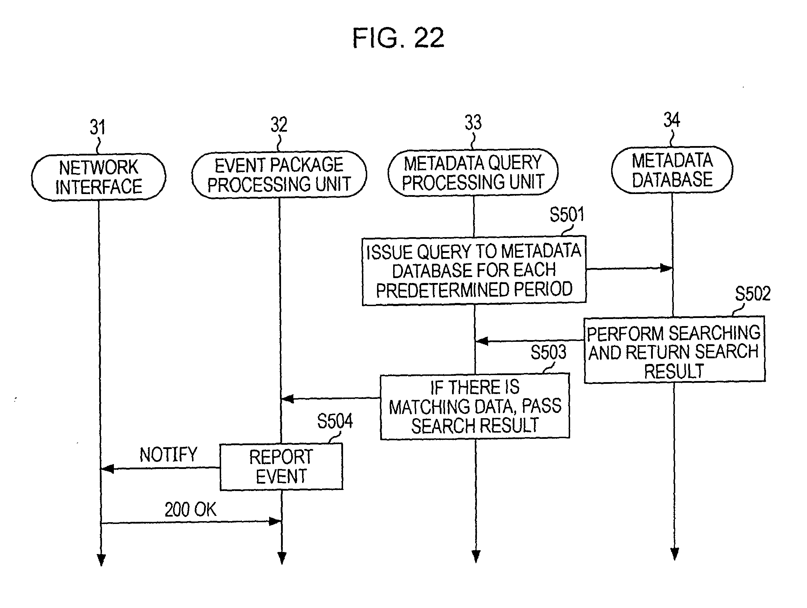

An exemplary process flow in the metadata server 30 after the metadata query processing unit 33 receives the query is shown in Figs. 21 and 22. When the metadata query processing unit 33 has received the query from the event package processing unit 32, the metadata query processing unit 33 may start up a query processing process to issue the query for the metadata database 34 that manages content metadata (step S401 in Fig. 21, step S501 in Fig. 22). The targeted metadata database 34 may be a metadata database that is managed by a single IPTV service provider, and may include a plurality of metadata databases over a plurality of IPTV service providers.

Searching of the metadata database 34 may be periodically performed. However, as shown in Fig. 21, after the metadata query processing unit 33 acquires a search result from the metadata database 34 in initial searching regardless of whether or not corresponding metadata, that is, metadata that matches the query, has been obtained (step S402 in Fig. 21), the metadata query processing unit 33 may pass the search result to the event package processing unit 32 and request the event package processing unit 32 to issue an SIP NOTIFY message for notification of an initial state (step S403 in Fig. 21). The search result from the metadata database 34 may be a metadata element that matches the query, or information for referring to or acquiring the metadata. When the event package processing unit 32 has received the SIP NOTIFY message for notification of the initial state, the event package processing unit 32 may store the search result from the metadata database 34 in the body part of the SIP NOTIFY message (see Figs. 10 and 11), and send the obtained SIP NOTIFY message to the EPG application 14 on the client side via the network interface 31 (step S404 in Fig. 21).

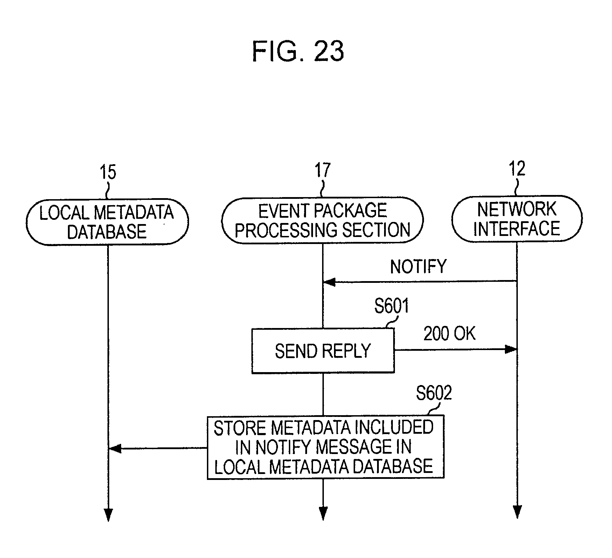

Fig. 23 shows an exemplary process flow in a case where the EPG application 14 on the client side receives the SIP NOTIFY message from the metadata server 30. As shown in Fig. 23, when the EPG application 14 on the client side has received the SIP NOTIFY message for notification of the initial state from the metadata server 30, the EPG application 14 may send back a "200 OK" response (in response thereto) to the metadata server 30 via the network interface 12 (step S601 in Fig. 23). In a case where content metadata or information for referring to or acquiring the metadata is stored in the body part of the SIP NOTIFY message for notification of the initial state, the EPG application 14 may store, in the local metadata database 15, the content metadata or information, for referring to or acquiring the metadata, stored in the body part of the SIP NOTIFY message (step S602 in Fig. 23).

The searching of the metadata server 30 may be periodically performed during a dialog period for an event notification subscription. In other words, as shown in Fig. 22, the metadata query processing unit 33 may issue a query to the metadata database 34 at a predetermined cycle (step S501 in Fig. 22). After the metadata query processing unit 33 acquires the search result from the metadata database 34 (step S502 in Fig. 22), the metadata query processing unit 33 may pass the acquired search result to the event package processing unit 32 and request the event package processing unit 32 to issue an SIP NOTIFY message for event notification (step S503 in Fig. 22). When the event package processing unit 32 has received the request to issue an SIP NOTIFY message, the event package processing unit 32 may store the search result in the body part of the SIP NOTIFY message for event notification, and send the SIP NOTIFY message to the EPG application 14 on the client side via the network interface 31 (step S504 in Fig. 22).

As shown in Fig. 23, after the EPG application 14 on the client side receives the SIP NOTIFY message for event notification from the metadata server 30, the EPG application 14 may send back a "200 OK" response (see Fig. 12) (in response thereto) to the metadata server 30 via the network interface 12 (step S601 in Fig. 23). The EPG application 14 may store, in the local metadata database 15, the content metadata or information, for referring to or acquiring the metadata, stored in the body part of the SIP NOTIFY message (step S602 in Fig. 23).

Afterwards, the IPTV system 100 may periodically repeat a "query-issuance-and-notification loop" from processing (step S501) in which the metadata server 30 issues the query to the metadata database 34 through processing in which the EPG application 14 on the client side sends back the "200 OK" response to the SIP NOTIFY message for event notification.

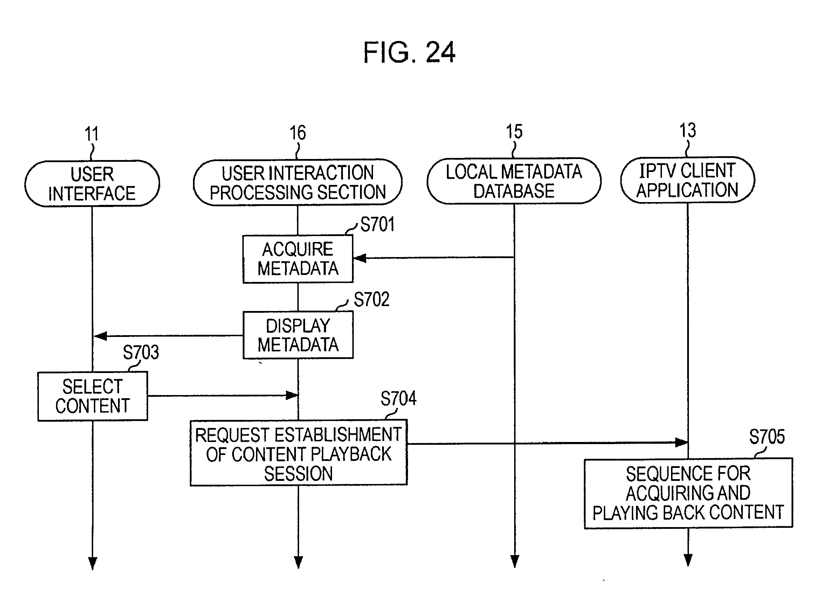

Fig. 24 shows an exemplary process flow in a case where a content search request from user 1 occurs on the client side in the "query-issuance-and-notification loop," or metadata in the local metadata database 15 is updated into the latest metadata. In this case, the user interaction processing section 16 in the EPG application 14 may acquire metadata from the local metadata database 15 (step S701 in Fig. 24). On the basis of the metadata, the user interaction processing section 16 may create an interface screen for allowing the user 1 to select content to be viewed and listened to, and display the interface screen for the user 1 via the user interface 11 (step S702 in Fig. 24). On the interface screen, content to be viewed and listened to may be selected by the user 1 (step S703 in Fig. 24). Then, the user interaction processing section 16 may read metadata of the selected content from the local metadata database 15, and pass, to the IPTV client application 13, a session establishing request, including the metadata, for content playback (step S704 in Fig. 24). When the IPTV client application 13 has received the session establishing request for content playback, the IPTV client application 13 may execute a sequence for acquiring and playing back the content (step S705 in Fig. 24).

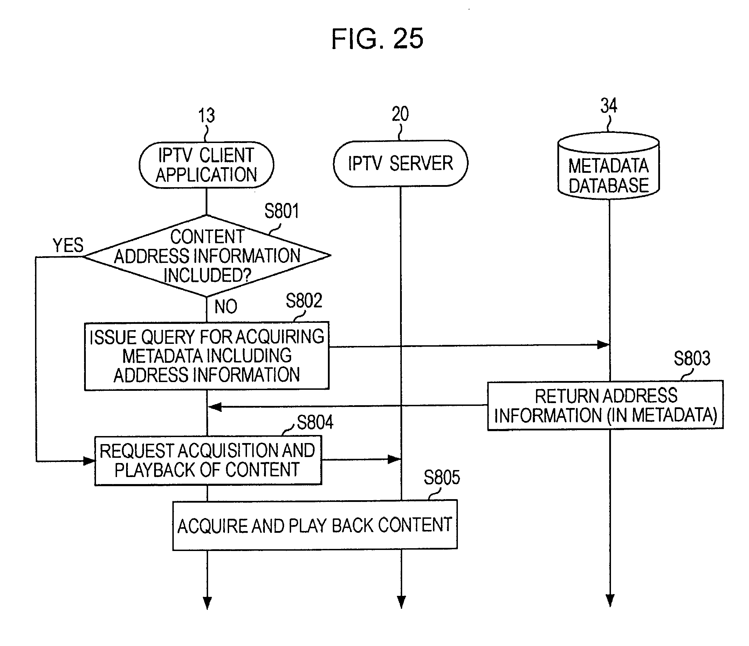

Fig. 25 shows an exemplary content acquisition-and-playback sequence. The IPTV client application 13 may determine whether the metadata of the content stored in the local metadata database 15 includes address information such as a URL of the content (step S801 in Fig. 25). In other words, whether address information that is a programld attribute value of a ProgramInformation element in the metadata elements shown in Fig. 13 is to be included as the search result from the metadata database 34 may be selected, depending on the configuration of the query.

If metadata of content stored in the local metadata database 15 includes address information of the content, the IPTV client application 13 may use the metadata including the address information to request the IPTV server 20, which can deliver the content, to establish a playback session for the content (step S804 in Fig. 25). After the playback session is established, by using the playback session, data of the content may be acquired from the IPTV server 20 and played back (step S805 in Fig. 25).

Alternatively, if metadata of content stored in the local metadata database 15 does not include any address information of the content, the IPTV client application 13 may generate a query for acquiring metadata including address information of the content, and directly request search from the metadata database 34 via the network 40 (step S802 in Fig. 25). In response to the search request, the metadata database 34 may search for metadata of the content, and send back address information included in the metadata to the IPTV client application 13 via the network 40 (step S803 in Fig. 25). By using the metadata (including the address information) directly acquired from the IPTV client application 13, the IPTV client application 13 may request the IPTV server 20, which can deliver the content, to establish a playback session for the content (step S804 in Fig. 25). After this playback session is established, by using the playback session, the IPTV client application 13 may acquire data of the content from the IPTV server 20 and play back the acquired data (step S805 in Fig. 25).

Next, an exemplary release process for releasing a dialog for an event notification subscription will be described.

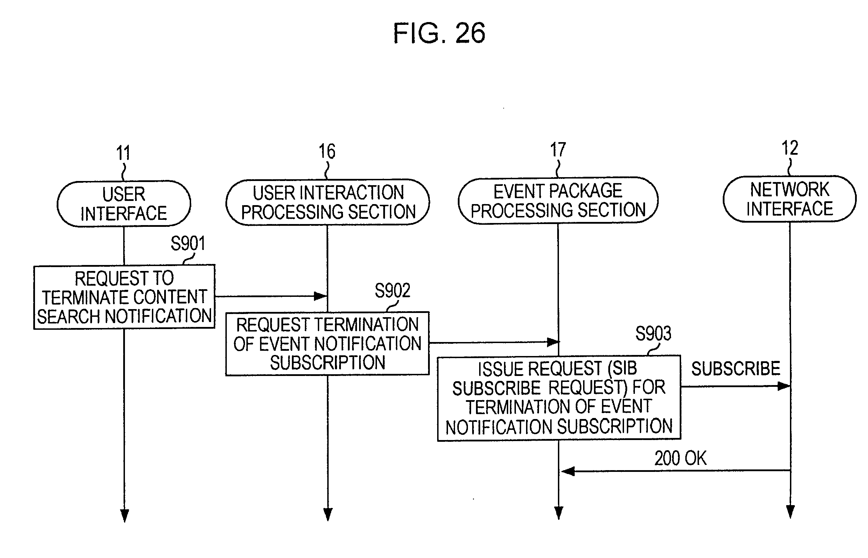

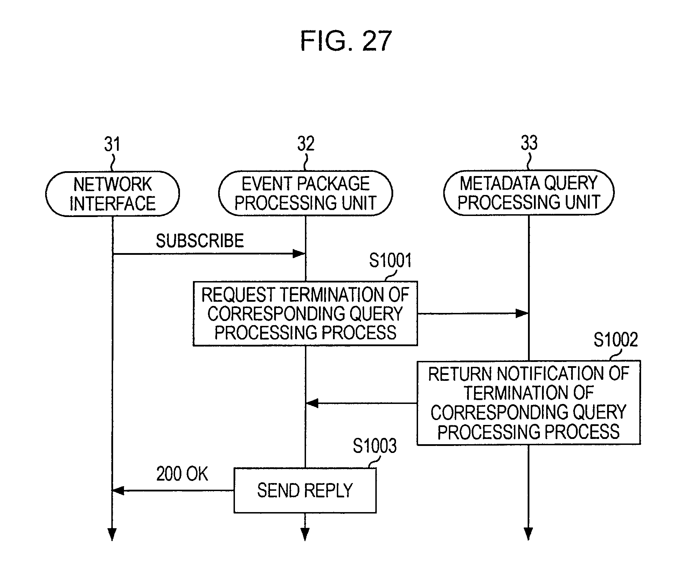

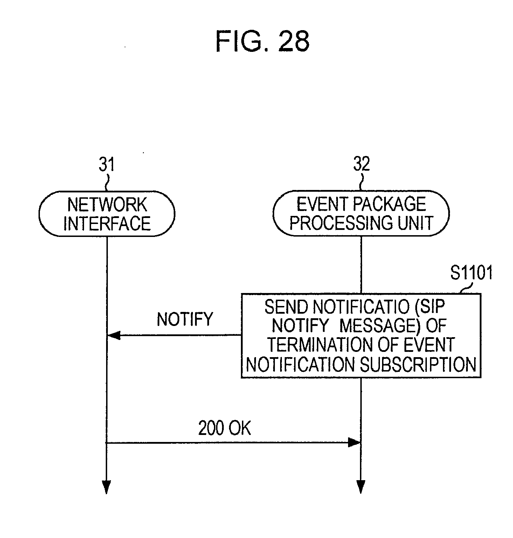

Fig. 26 shows an exemplary procedure for the release process for releasing the dialog for the event notification subscription on the client side. Figs. 27 and 28 show exemplary procedures for the release process for releasing the dialog for the event notification subscription in the metadata server 30.

The user interaction processing section 16 in the EPG application 14 may accept a request to terminate content search-notification from the user 1 via the user interface 11 (step S901 in Fig. 26). When the user interaction processing section 16 has accepted the content search-notification terminating request, the user interaction processing section 16 may request the event package processing section 17 to terminate event notification subscription (step S902 in Fig. 26). When the event package processing section 17 has received the request to terminate the event notification subscription, the event package processing section 17 may send an SIP SUBSCRIBE request for event notification subscription termination (step S903 in Fig. 26).

When the event package processing unit 32 in the metadata server 30 has received the SIP SUBSCRIBE request for event notification subscription termination from the EPG application 14 via the network interface 31, the event package processing unit 32 may request the metadata query processing unit 33 to terminate a corresponding query processing process (step S1001 in Fig. 27). In response to the request to terminate the query processing process, the metadata query processing unit 33 may terminate the corresponding query processing process, and return query-processing-process termination notification representing termination of the query processing process to the event package processing unit 32 (step S1002 in Fig. 28). In response to the query-processing-process termination notification from the metadata query processing unit 33, the event package processing unit 32 may send a "200 OK" response to the EPG application 14 on the client side via the network interface 31 (step S1003 in Fig. 27). After that, the event package processing unit 32 may release the dialog for the event notification subscription.

After releasing the dialog for the event notification subscription, the event package processing unit 32 may generate an SIP NOTIFY message for event notification subscription termination and send the generated SIP NOTIFY message to the EPG application 14 on the client side via the network interface 31 (step S1101 in Fig. 28). When the event package processing section 17 in the EPG application 14 has received the SIP NOTIFY message for event notification subscription termination, the event package processing section 17 may release the dialog for the event notification subscription and send a "200 OK" response to the server side via the metadata server 30.

Consistent with an embodiment of the claimed invention, a system that discovers desired content by using the SIP SUBSCRIBE/NOTIFY mechanism is provided that can reduce the cost of acquisition of metadata from the metadata server 30 by the IPTV client terminal 10. In addition, even if new metadata is added or updating of metadata has occurred in the metadata server 30, while the dialog for the event notification subscription is being established, in the metadata server 30, the metadata database 34 may be periodically searched on the basis of query issuance, and an SIP NOTIFY message storing a search result may be sent to the IPTV client terminal 10. Thus, the IPTV client terminal 10 may typically retain metadata of desired latest content.

Embodiments consistent with the claimed invention have been described with reference to the accompanying drawings. The foregoing description has been presented for purposes of illustration. It is not exhaustive and does not limit the invention to the precise forms or embodiments disclosed. Modifications and adaptations of the invention will be apparent to those skilled in the art from consideration of the specification and practice of the disclosed embodiments of the invention. For example, the described implementations include software, but systems and methods consistent with the claimed invention may be implemented as a combination of hardware and software or in hardware alone. Examples of hardware include computing or processing systems, including personal computers, servers, laptops, mainframes, micro-processors and the like. Additionally, although aspects of the invention are described for being stored in memory, one skilled in the art will appreciate that these aspects can also be stored on other types of computer-readable media, such as secondary storage devices, for example, hard disks, magnetic disks, optical disks, solid state memory, or other forms of RAM or ROM.

Computer programs based on the written description and methods of this invention are within the skill of an experienced developer. The various programs or program modules can be created using any of the techniques known to one skilled in the art or can be designed in connection with existing software.

Moreover, while illustrative embodiments of the invention have been described herein, the scope of the invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. Further, the steps of the disclosed methods may be modified in any manner, including by reordering steps and/or inserting or deleting steps, without departing from the principles of the invention. It is intended, therefore, that the specification and examples be considered as exemplary only, with a true scope and spirit of the invention being indicated by the following claims and their full scope of equivalents.

## Claims

1. A server apparatus comprising:
a database configured to store metadata of content;
message receiving means for receiving a subscribe request for an event notification subscription from a client terminal, the subscribe request including a search condition for the metadata, and for establishing a dialog for the event notification subscription;
metadata search means for searching the database on the basis of the search condition; and
message sending means for generating a notify message including a search result obtained by the metadata search means and for sending the notify message to the client terminal.

2. The server apparatus of claim 1, wherein the subscribe request and the notify message are based on a protocol for a session control.

3. The server apparatus of claim 2, wherein the protocol is Session Initiation Protocol (SIP).

4. The server apparatus of any one of the preceding claims, wherein, after the dialog is established, the metadata search means periodically searches the database.

5. The server apparatus of any one of the preceding claims, wherein the search condition is a query for the database.

6. The server apparatus of any one of the preceding claims, wherein the search condition is information for referring to or acquiring a query for the database

7. The server apparatus of any one of the preceding claims, wherein the search result includes matched metadata that matches the search condition.

8. The server apparatus of any one of the preceding claims, wherein the search result includes information for referring to or acquiring matched metadata that matches the search condition.

9. The server apparatus of any one of the preceding claims, wherein the metadata is in TV-Anytime format.

10. A network system comprising:
a client terminal capable of receiving content via a network and playing the content; and
a server apparatus configured to manage metadata of the content,
wherein the client terminal includes:
message sending means for generating a subscribe request for an event notification subscription, the subscribe request including a search condition for the metadata, and for sending the subscribe request to the server apparatus; and
a metadata storage unit configured to receive a notify message as a response to the subscribe request from the server apparatus, and to store a result of searching for the metadata, the result being included in the notify message, and
wherein the server apparatus is in accordance with any one of the preceding claims.

11. A content discovery-and-notification method comprising:
generating a subscribe request for an event notification subscription, the subscribe request including a search condition for metadata of content;
sending the subscribe request from a client terminal to a server apparatus; receiving the subscribe request from the client terminal;
establishing a dialog for the event notification subscription;
searching a database storing the metadata of the content based on the search condition;
generating a notify message including a search result obtained by the searching of the database; and
sending the notify message from the server apparatus to the client terminal.

12. The method of claim 11, wherein the subscribe request and the notify message are based on a protocol for a session control.

13. The method of claim 12, wherein the protocol is Session Initiation Protocol (SIP).

14. A computer program capable on execution by a server apparatus of causing the server apparatus to perform a method according to any one of claims 11 to 13.

15. A computer-readable storage medium storing a computer program according to claim 14.
